Europäisches Patentamt

(19) European Patent Office

Office européen des brevets

(11) Publication number: **0 079 040**
**A2**

# EUROPEAN PATENT APPLICATION

(21) Application number: 82110127.6

(22) Date of filing: 03.11.82

(51) Int. Cl.³: **B 01 D 31/00**
**B 01 D 13/00, B 01 D 29/30**

(30) Priority: 06.11.81 US 319066

(43) Date of publication of application:
18.05.83 Bulletin 83 20

(84) Designated Contracting States:
BE DE FR GB IT NL

(71) Applicant: HYDRONAUTICS, INCORPORATED
7210 Pindell School Road
Laurel Maryland 20810(US)

(72) Inventor: Tulin, Marshall P.
4615 N. Park Ave.
1209 Chevy Chase MD 20815(US)

(72) Inventor: Liu, Han Lieh
4641 Dapple Ct.
Ellicott City, MD 21043(US)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) Method and apparatus for increasing the cross-flow filtration fluxes of liquids containing suspended solids.

(57) A method of increasing the cross-flow filtration flux of a suspended solids laden liquid through a porous filter tube wall comprises the steps of: (a) flowing the liquid through the filter tube and permeating the liquid through the tube wall by establishing a transmembrane pressure within the tube, thereby depositing at least a portion of the solids on the inner surface of the tube as a sludge layer; (b) periodically reducing the transmembrane pressure to about zero for periods not in excess of about 2 minutes thereby periodically permitting enhanced erosion of the sludge layer so as to reduce its thickness; and (c) re-establishing the transmembrane pressure after each intermittent reduction, whereby the time-averaged filtration flux is increased. Typically, the transmembrane pressure is established by creating a net positive pressure within the filter tube, and the periodic reduction of the transmembrane pressure is achieved by periodically reducing the net positive pressure to about zero.

Also disclosed is a method of increasing the cross-flow filtration flux of a suspended solids laden liquid through a porous filter tube wall, comprising the steps of: (a) flowing the liquid through the filter tube and permeating the liquid through the tube wall by establishing a transmembrane pressure within the tube, thereby depositing at least a portion of the solids on the inner surface of the tube as a sludge layer; (b) periodically increasing the circulation velocity of the liquid flowing lengthwise through the filter tube to a value in excess of about 7 fps, preferably between about 10 and about 20 fps, and more preferably to about 15 fps thereby permitting enhanced erosion of the sludge layer so as to reduce its thickness; and (c) reducing the circulation velocity after each intermittent increase, whereby the time-averaged filtration flux is increased.

Apparatus is also disclosed for practicing the methods of the invention.

./...

FIG. 2

Applicant: Hydronautics, Incorporated

# METHOD AND APPARATUS FOR INCREASING THE CROSS-FLOW FILTRATION FLUXES OF LIQUIDS CONTAINING SUSPENDED SOLIDS.

The present invention relates to the removal of suspended solids from liquids, particularly domestic, industrial and municipal waste waters, and brackish or sea water. More specifically, the invention relates to a method and apparatus for increasing the rate of transfer of liquids containing suspended solids across a cross-flow filter medium. The rate of transfer across a cross-flow medium is referred to herein as the "filtration flux".

In treating domestic, industrial and municipal waste waters, as well as in the pretreatment of brackish or sea water, the removal of suspended solids, including solids of colloidal dimensions, is generally a required unit operation. Cross-flow filtration utilizing, for example, microfiltration, ultrafiltration or reverse osmosis, and through-flow filtration, utilizing, for example, multi-media filters, have both been used in the art to remove such suspended solids.

Conventional through-flow filters disadvantageously require back washing to eliminate filtered particles which continuously accumulate on and enter into the filter medium. By its very nature, through-flow filtration is thus a batch process, wherein the filtration flux declines relatively rapidly if the driving pressure differential across the filter medium is held constant. A decline in filtration flux is, therefore, a well-recognised problem in through-flow filtration.

On the other hand, in cross-flow filtration, because the direction of the liquid feed flow is tangential to the surface of the filter medium, accumulation of the filtered solids on the filter surface is less pronounced, as a result of the shearing action of the flow. Nevertheless, a thin sludge layer, or cake, of the filtered solids is formed on the filter surface due to the nature of the hydrodynamic flow conditions in the hollow microporous tubes which are typically utilized as the filter medium in cross-flow microfiltration. In some cross-flow filtration systems, this sludge build-up results in rapid flux decline. Therefore, some existing cross-flow systems utilize periodic backflushing, in which the permeate flow direction is temporarily reversed. As will be brought out in detail below, backflushing is not a particularly satisfactory solution. Thus, the problem of declining filtration flux as filtered particles accumulate on the inner surface of such tubes as filtration progresses is a major problem which remains essentially unsolved.

A method of cross-flow microfiltration utilizing thick-walled, microporous thermoplastic tubes has recently been developed by Hydronautics Incorporated, of Laurel, Maryland. The filtration characteristics of these tubes, sold by Hydronautics Incorporated, under its trademark HYDROPERM*, combine both the "in-depth" filtration aspects of multi-media filters and the "thin-skinned" aspects of membrane ultrafilters. The HYDROPERM* tubes differ from conventional membrane ultrafilters by having pore sizes on the order of
* Registered Trademark several microns, wherein the length of a pore is many times that of its diameter. These tubes are described in greater detail, for example, in report No. 77-ENAS-51 of the American Society of Mechanical Engineers, entitled "Removal of Suspended and Colloidal Solids from Waste Streams by the Use of Cross-Flow Microfiltration", which is incorporated herein by reference to the extent necessary for a thorough understanding of the invention.

In general, any liquid from which suspended solids removal is desired will contain a wide range of particulate sizes, ranging in effective diameter from several microns down to colloidal dimensions. Because of the "in-depth" filtration characteristics of thick-walled, thermoplastic tubes, such as HYDROPERM* tubes, particles smaller than the largest pore size of a tube enter the wall matrix, whereas particles larger than the largest pore size are retained at the inner wall of the tube and form a sludge layer (commonly referred to as a "dynamic membrane").

Those particles initially entering into the wall matrix ultimately become entrapped within it, because of the irregular and tortuous nature of the pore structure. As microfiltration proceeds, further penetration of small particles into the wall matrix is inhibited by the presence of the dynamic membrane. The gradual formation of the dynamic membrane, together with the initial clogging of the pore structure of the tube by entrapped particles, results in a decline in the filtration flux. This decline is approximately exponentially related to filtration time.

In view of the fact that an increase in filtration flux will permit far more economical processing of solid laden liquids, the art has sought methods for inhibiting the above-described filtration flux decline in cross-flow filtration systems and/or for restoring the filtration flux in such systems to a higher value, after it has declined.

Various cleaning techniques have previously been investigated for restoring the filtration flux value. Such cleaning techniques have involved chemical and/or physical cleaning of the surface of the filter medium. For example, chemical solvents have been used to dissolve the layer-building filtered particles so as to yield a clean, layer-free filter surface. Hydrochloric acid is an example of one such solvent commonly being used. On the other hand, a simple physical cleaning technique commonly used is backflushing of the filter medium. This cleaning technique, which is frequently used in conjunction with cross-flow filtration processes utilizing hollow tubular filters, possesses several disadvantages, including the fact that clean liquid (e.g., water), usually a portion of the permeated liquid itself, must be used in the backflushing operation. Thus, the net permeate production is reduced. Furthermore, the liquid which is backflushed through the tubular filter contains sludge from the inner tube surface which must be reprocessed, thereby increasing the total volume of liquid which must be treated by the system. An additional disadvantage of backflushing results from the fact that some conventional filter tubes ar pretreated in order to yield higher fluxes or better permeate qualities. Each time backflushing is performed, it may thus be necessary to pretreat such filter tubes again. This is obviously time consuming and uneconomical. Consequently, backflushing is not a satisfactory cleaning technique for pretreated tubular filters.

The method and apparatus of the present invention permits a cross-flow filter medium to yield higher fluxes by periodically reducing the thickness of the dynamic membrane formed on the surface of the filter. Experimental tests which we have conducted, to be described in detail below, show that although the cross-flow microfiltration fluxes obtained in accordance with the present invention decline over time, the fluxes achieved at the end of the test periods were, nonetheless, generally higher than those which were achieved in identical or substantially similar cross-flow filtration systems in which the present invention was not utilized. The filtration fluxe values obtained in accordance with the present invention depend upon the characteristics of the particular liquid feed being processed, and particularly the characteristics of the suspended solids, as well as the various operational parameters of the overall filtration process.

We have also found that the characteristics of the permeated solution are not affected by the practice of the present invention.

The increase in cross-flow filtration fluxes obtained in accordance with the present invention constitutes a significant contribution to the cross-flow filtration art.

The present invention overcomes the problems and disadvantages of the prior art by providing a method and apparatus for increasing the cross-flow filtration flux of solids laden liquids through a filter tube by periodically reducing the thickness of the sludge layer (dynamic membrane) on the interior surface of the tube, without having to resort to backflushing.

The present invention utilizes the physical characteristics of the suspended solids in a cleaning process to enhance overall flux behaviour in the filtration process. Other significant parameters in the cleaning process of the invention are the normal and the increased (enhanced) liquid circulation velocities, the transmembrane pressure, the time interval between successive cleaning steps, and the duration of the cleaning steps per se. As used herein, and in the claims, "transmembrane pressure" means the net positive pressure within the filter tube acting orthogonally to the interior surface of the tube wall to effect cross-flow permeation of the liquid through the tube wall; and "normal" and, "increased" circulation velocities refer to the velocity of the liquid flowing lengthwise through the filter tube (i.e., parallel to the tube wall) during normal filtration and during the cleaning step, respectively.

The invention can be practiced either by (1) periodically closing the permeate  port in the permeate-collecting jacket conventionally surrounding the filter tube in a cyclic fashion, thus essentially shutting off the permeate flow periodically, or (2) periodically reducing the system back pressure in a cyclic fashion, thus setting the transmembrane pressure to about zero and inherently increasing the circulation velocity of the liquid when the back pressure is so reduced.  Both of these techniques (cycles) may be practiced at the same time or independently, and their effectiveness is preferably increased by increasing the circulation velocity of the liquid through the filter tube during the cleaning intervals of the cycle.

Additional objects and advantages of the invention will be set forth in part in the description which follows, and in part will be obvious from the description, or may be learned by practice of the invention.  The objects and advantages of the invention may be realised and attained by means of the instrumentalities and combinations particularly pointed out in the appended claims.

To achieve the objects and in accordance with the purposes of the invention, as embodied and broadly described herein, a method of increasing the cross-flow filtration flux of a suspended solids laden liquid through a porous filter tube wall comprises the steps of: (a) flowing the liquid through the filter tube and permeating the liquid through the tube wall by establishing a transmembrane pressure within the tube, thereby depositing at least a portion of the solids on the inner surface of the tubes as a sludge layer; (b) periodically reducing the transmembrane pressure to about zero for periods not in excess of about 2 minutes, preferably within the range of from about 5 seconds to about 60 seconds, and more preferably on the order of about 30 seconds, thereby periodically permitting enhanced erosion of the sludge layer so as to reduce its thickness; and (c) re-establishing the transmembrane pressure after each intermittent reduction, whereby the time-averaged filtration flux is increased. Typically, the transmembrane pressure is established by creating a net positive pressure within the filter tube, and the periodic reduction of the transmembrane is achieved by periodically reducing the net positive pressure to about zero.

As broadly embodied herein, the invention further comprises processes as described above incorporating the following additional steps: (1) collecting the liquid permeated through the filter tube wall in a closed jacket surrounding the filter tube in a manner adapted to establish a pressure differential between the liquid in the jacket and the liquid in the tube, (2) removing the collected liquid from the jacket via a port extending through the jacket, (3) periodically reducing the pressure differential between the jacket and the interior of the filter tube to about zero for periods not in excess of about 2 minutes, preferably within the range of from about 5 seconds to about 60 seconds, and more preferably on the order of about 30 seconds, by closing the port in the permeate-collecting jacket, thereby permitting enhanced erosion of the sludge layer so as to further reduce its thickness, and (4) re-establishing the pressure differential after each intermittent reduction by opening the port, whereby the time-averaged filtration flux is further increased.

The invention further comprehends the incorporation of the following additional process step in the above-described methods: periodically increasing the circulation velocity of the liquid flowing lengthwise through the filter tube coincidentally with the periods during which the transmembrane pressure is reduced to about zero, the velocity being typically increased to a value in excess of about 7 ft. per sec. (fps) and preferably between about 10 and about 20 fps and more preferably to about 15 fps.

In its broadest aspects, the invention also comprises a method of increasing the cross-flow filtration flux of a suspended solids laden liquid through a porous filter tube wall, comprising the steps of; (a) flowing the liquid through the filter tube and permeating the liquid through the tube wall by establishing a transmembrane pressure within the tube, thereby depositing at least a portion of the solids on the inner surface of the tube as a sludge layer; (b) periodically increasing the circulation velocity of the liquid flowing lengthwise through the filter tube to a value in excess of about 7 fps, preferably between about 10 and about 20 fps, and more preferably to about 15 fps thereby permitting enhanced erosion of the sludge layer so as to reduce its thickness; and (c) reducing the circulation velocity after each intermittent increase. Apparatus is also contemplated for practicing this method of the invention.

Broadly, the invention further comprises apparatus for increasing the cross-flow filtration flux of a suspended solids laden liquid through a porous filter tube wall, comprising: (a) at least one porous filter tube; (b) means for flowing the liquid through the filter tube; (c) means for establishing a transmembrane pressure within the filter tube, thereby effecting permeation of the liquid through the tube wall, causing at least a portion of the solids to be deposited on the inner surface of the tube as a sludge layer; and (d) means for periodically reducing the transmembrane pressure to about zero and then re-establishing it, thereby permitting periodic enhanced erosion of the sludge layer so as to reduce its thickness and increase the time-averaged filtration flux.

The accompanying drawings, which are incorporated in and constitute a part of this specification, illustrate various features of the invention and, together with the description, serve to explain the principles of the invention.

Brief Description of the Drawings.

Fig. 1 is a schematic, sectional view of a cross-flow microfiltration tube, showing the direction of feed flow (circulation) and the direction of filtrate flow (permeation);

Fig. 2 is a schematic diagram showing a single filtration tube test loop suitable for practicing the present invention;

Figs. 3a and 3b are schematic flow diagrams illustrating a further embodiment of the present invention; and

Figs. 4-6 are graphs showing the experimental data from Examples 1-3, respectively, described below.

Reference will now be made in detail to the presently preferred embodiments of the invention, examples of which are illustrated in the accompanying drawings.

The present invention is useful in increasing the flux during cross-flow filtration, and particularly microfiltration, of liquids, such as, for example, waste water or brackish or sea water, containing suspended solids, including particles of colloidal dimensions. Representative waters containing suspended solids which can be treated in accordance with the present invention include laundry waste, electroplating waste, municipal waste, lead acid battery manufacturing waste, metal cutting and/or refining process waste, sea water, e.g., prior to desalination or ground recharging of petroleum wells, etc.

In accordance with the invention, the average thickness of the sludge layer within a cross-flow filtration tube is controlled by operating the filtration system so as to periodically (cyclically) induce relatively short periods of greatly enhanced erosion within the tube, during which time the sludge layer is substantially reduced in thickness. Between such periods of sludge layer removal, permeation through the tube wall is carried out as usual and the sludge layer again grows in thickness. It is apparent that the average thickness of the sludge layer will depend on, among other things, (i) the length of time between the periods of enhanced erosion and (ii) the duration of the enhanced erosion periods, generally increasing with the former.

The present invention is based, at least in part, on our observations and theoretical deductions that the sludge layer is held onto the interior tube wall in large part by the transmembrane pressure, which arises from the resistance to permeation throught he tube wall; this result being more true, the more cohesionless the sludge layer. Fortunately, pretreatment techniques exist in the art for creating substantially cohesionless sludge layers.

Expressed mathematically, the invention is also based upon our discovery that, for an ideally (assumed) cohesionless material:

$$E \propto PV \left(\frac{V}{W}\right) \qquad (1)$$

where E is the erosion rate, P is the liquid density, V is essentially the circulation velocity, and W is the permeation velocity normal to the sludge layer. This equation shows that erosion of the sludge layer can be substantially enhanced by reducing the permeation velocity (W) to a relatively small value and/or by increasing the circulation velocity (V). In accordance with the invention, we have found that a periodic increase in the circulation velocity (V) provides an effective technique for removal of that portion of the sludge layer which is in immediate contact with the interior surface of the tube wall (to which it may be adhered).

As will be discussed in greater detail below, in accordance with the invention, the erosion rates obtainable during the intervals of enhanced erosion will generally be sufficiently high so that the great bulk of the sludge layer is removed during a very short time, measured in minutes or fractions thereof. Consequently, the effect of conventional tube cleaning by backflushing can be obtained in cross-flow filtration systems in accordance with the present invention through periodic erosion of the sludge layer by periodically: (1) increasing the circulation velocity, (2) substantially reducing the permeation velocity, or (3) reducing the transmembrane pressure drop, or any combination of these three steps. Such an effect may thus be obtained without having to reverse the liquid flow through the filter tube wall, thus avoiding the serious disadvantages of conventional backflushing.

The present invention also permits efficient and economic use of the typical design and construction of conventional cross-flow filtration systems, in that periodic erosion enhancement can easily be achieved by simply periodically opening the downstream back pressure valve present in all such systems, which simultaneously reduces the transmembrane pressure to a small value and substantially increases the circulation velocity (steps 1 and 3, above).

Cross-flow filtration in accordance with the invention may be accomplished, for example, by the use of thick-walled, microporous thermoplastic tubes. These tubes can be made from a wide variety of extrudable thermoplastics, such as, for example, nylon or polyethylene, and typically have walls of about one millimeter in thickness. Although subject to variation, such tubes may, for example, possess a dominant pore size on the order of about one to ten microns and a porosity on the order of about 65%, i.e., the pores cover 65% of the surface area of the tubes. The preferred, although certainly not the only, microporous thermoplastic tubes useful in practicing the present invention are the previously mentioned HYDROPERM* tubes having the characteristics referred to above, which tubes are presently commercially available from Hydronautics, Inc., of Laurel, Maryland.

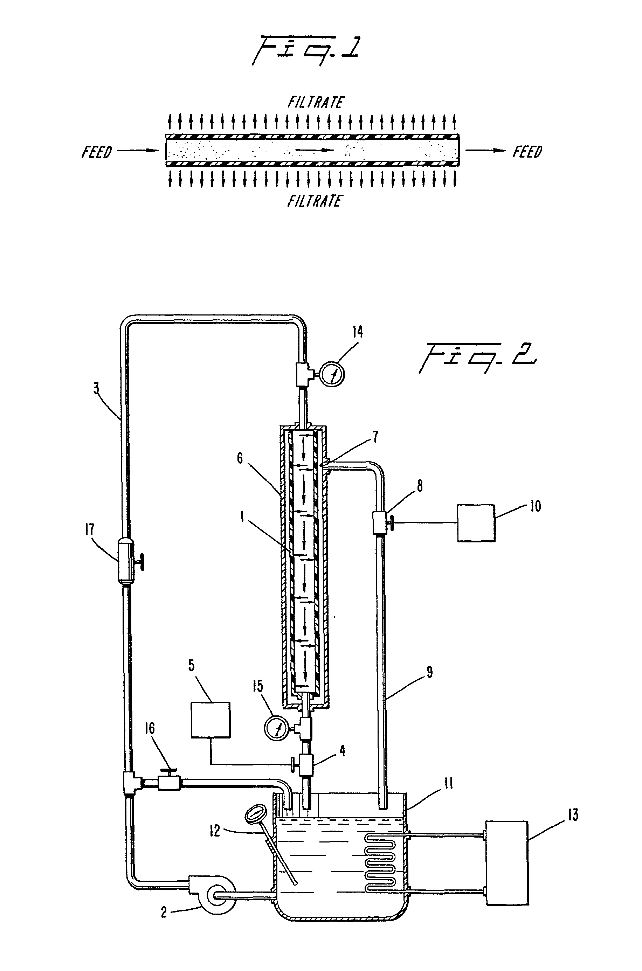

A schematic view of cross-flow filtration through such a thick-walled, microporous thermoplastic tube is shown in Fig. 1. A liquid feed flows through the inside tube at relatively low pressures, e.g., 2 to 50 psi, preferably 10 to 20 psi, and filtrate permeation occurs through the tube walls, which are relatively thick, e.g., on the order of about one millimeter. Use of low pressure and thick walls differentiate this type of cross-flow microfiltration from conventional membrane ultrafiltration, which utilizes filtration pressures approximately greater than or equal to 50 psi and much thinner membranes.

As mentioned above during the initial microfiltration process, suspended solids in the feed are driven to the interior tube wall and are deposited onto the wall as the dynamic membrane (sludge layer), due to the force of the transmembrane pressure. The growth of this dynamic membrane is limited by the shear forces acting on it due to the circulation velocity of the liquid flowing lengthwise along the tube. This shearing action takes the form of erosion. The balance of the deposition rate and the erosion rate of the dynamic membrane establishes the equilibrium sludge layer thicknesses, and therefore the plateau fluxes, for the feed treated. This balancing condition is critically dependent on the characteristics of the suspended solids in the feed liquid. Two types of suspended solids can be categorized as limiting cases, namely, those which are cohesionless and those which are cohesive. For cohesive solids, the bonding stress between particles is relatively large. Once they are brought into contact, higher shearing force is required to break their bond. In other words, this type of solid requires a relatively strong erosion effect. On the other hand, cohesionless solids have weak bonds with respect to each other and are therefore much more easily eroded. Even in the case of a cohesionless solid, however, binding to the wall of the filter tube may occur, thus producing a thin, adhering layer immediately adjacent to the wall, which will require a strong erosion effect according to the invention in order to remove it.

Although temperature will influence the feed viscosity, and therefore the flux rates, it is not expected to show too much effect on the cleaning process of the present invention over ranges of temperature typically encountered in practice.

Other parameters that govern solids behaviour are the effective solid particle diameter and the particle size distribution in the feed. The characteristics of the feed liquid itself, such as pH, viscosity, etc., may also show some influence on the behaviour of the suspended solids in the feed. Chemical additives are commonly used in waste water treatment, and their addition to the waste water will also change the characteristics of the suspended solids, and thus will vary the flux rate.

Since it is desirable to render the sludge layer on the filter tube wall cohesionless, chemical pretreatment of the feed prior to cross-flow filtration will prove advantageous in practicing the invention in conjunction with the filtration of many liquids. In general, the objective of such pretreatment should be to obtain a feed comprising a fluffy or loose type, cohesionless floc. Examples of typical conventional pretreatment additives suitable for use in the present invention include, but are not limited to, conventional flocculants (e.g., calcium hydroxide, alum, calcium sulfate, ferric hydroxide, etc.), poly-electrolyte flocculants, and the additives disclosed in U.S. Patent Application Serial No. 152,639, assigned to a common assignee herewith.

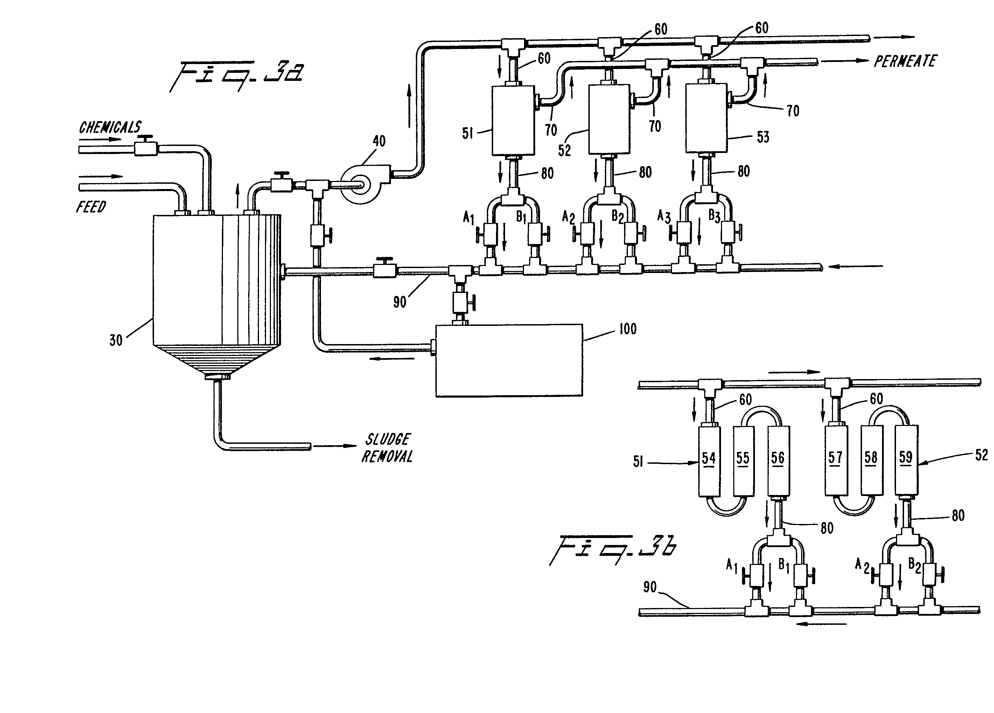

Making reference now to Fig. 2, in one preferred embodiment of the invention, the cross-flow filtration flux of a suspended solids laden liquid through porous filter tube 1 is increased by: (1) flowing the liquid through the filter tube, through the use of, for example, a conventional circulation pump 2 and feed line 3; (2) permeating the liquid through the tube wall by establishing a transmembrane pressure within tube 1, thereby depositing at least a portion of the solids on the inner surface of the tube as a sludge layer (not shown); (3) periodically (intermittently) reducing the transmembrane pressure to about zero for periods not in excess of about 2 minutes, preferably for periods within the range of from about 5 seconds to about 60 seconds, and more preferably for periods of about 30 seconds, thereby permitting enhanced erosion of the sludge layer so as to reduce its thickness; and (4) re-establishing the transmembrane pressure after each intermittent reduction, preferably for periods not in excess of 20 minutes, and more preferably in the range of from about 1 minute to about 10 minutes, whereby the time-averaged filtration flux is increased.

In accordance with one preferred embodiment of the invention, the transmembrane pressure is established by creating a net positive pressure in filter tube 1, through the use of a normally partially closed conventional back pressure valve 4 located at, or near, the downstream end of filter tube 1, and the periodic reduction of the transmembrane pressure is achieved by periodically relieving the net positive pressure in the filter tube (i.e., reducing it to about zero) by fully, or nearly fully, opening back prssure valve 4, thus also inherently increasing the velocity of the liquid flowing through filter tube 1. This may be accomplished, for example, by a conventional time-regulated actuating means operatively connected to valve 4. As embodied herein, and as shown schematically in Fig. 2, the actuating means includes a conventional time-regulated control linkage 5. The transmembrane pressure is re-established by simply partially re-closing valve 4 through control linkage 5.

In another preferred embodiment of the invention (Fig. 2), the liquid permeated through filter tube 1 is collected in a closed jacket 6 surrounding filter tube 1 in a manner adapted to establish a pressure differential between the liquid in jacket 6 and the liquid within tube 1, and the collected liquid is removed from jacket 6 via port 7 extending through the jacket (also referred to herein as as the "permeate port"). Permeate port 7 may be situated as shown in Fig. 2, or alternatively, it may be located at the top of jacket 6, which would guarantee that essentially no air would be present in jacket 6.

In this embodiment, the pressure differential between jacket 6 and the interior of filter tube 1 is periodically reduced to about zero for periods not in excess of about 2 minutes, preferably for periods within the range of from about 5 seconds to about 60 seconds, and more preferably for about 30 seconds, by closing port 7 through the use of valve 8. This results in enhanced erosion of the sludge layer so as to reduce its thickness. The pressure differential is re-established after each intermittent reduction by re-opening port 7. The intermittent opening and closing of port 7 may be accomplished, for example, by a conventional time-regulated actuating means operatively connected to a conventional valve 8 located within port 7 or the permeate line 9 connected to port 7. As embodied herein, and as shown schematically in Fig. 2, the actuating means includes conventional time-regulated control linkage 10 similar to control linkage 5.

In conjunction with either of the above-described embodiments of the invention, the erosion of the sludge layer, and consequently the enhancement of the time-averaged filtration flux, may be further increased by periodically increasing the circulation velocity of the liquid flowing lengthwise through filter tube 1 coincidentally with the periods during which the transmembrane pressure is reduced to about zero; that is, coincidentally with the time intervals when: (1) the net positive pressure in filter tube 1 is relieved, or (2) the pressure differential between jacket 6 and the interior of filter tube 1 is reduced to about zero, as the case may be.

Moreover, in accordance with the invention, enhanced erosion of the sludge layer may be accomplished solely by such periodic increases in the circulation velocity, i.e., as an alternative to either of the above-described flux enhanced embodiments. Preferably, the circulation velocity is increased during the cleaning cycle, where so desired, to at least about 7 ft. per sec. (fps), more preferably to a value within the range of from about 10 fps to about 20 fps, and even more preferably to about 15 fps. This may be compared with circulation velocities through filter tubes during the filtration cycle, and which are desirable from the point of view of energy cost, in the range of 1-7 fps, and preferably at the lower end of the range.

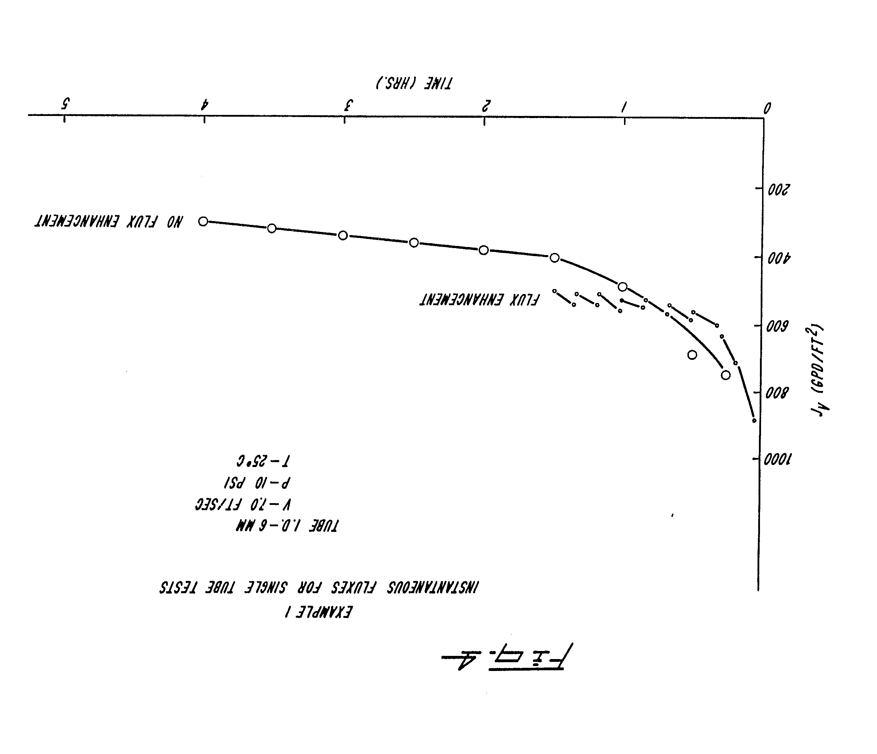

Where desired, the circulation velocity of the liquid flowing lengthwise through filter tube 1 may be periodically increased by: (1) opening back pressure valve (4), (2) increasing the pumping action of circulation pump 2, (3) providing an additional circulation pump (not shown) in feed line 3 to augment the pumping action of pump 2, and/or (4) preferably by periodically increasing the fraction of the normal pumping volume which passes through the filter tube, or parallel tube bundles consisting of as many as hundreds of tubes in parallel (referred to herein and in the claims as a "module" - see, e.g., Figs. 3a and 3b), during the cleaning portion of the cycle. The latter of these processes will inherently result when the back pressure valve is opened on only one of two or more tubes or modules or module systems which are fluidly connected in parallel and fed by a single pump (Figs. 3a and 3b).

To summarize, in accordance with the invention, as broadly embodied herein, enhanced erosion of the filter tube sludge layer, with consequent flux enhancement, may be achieved by: (1) periodically reducing the transmembrane pressure to about zero for relatively short time intervals, and/or (2) periodically increasing the circulation velocity to at least about 7 ft. per sec. for relatively short time intervals. As noted above, the former of these cleaning techniques may be accomplished by periodically: (a) reducing the net positive pressure within the filter tube to about zero, and/or (b) reducing the pressure differential between the interior of the filter tube and the jacket surrounding the tube to about zero. As also indicated earlier, the latter of these cleaning techniques, i.e., (2) above, can provide effective removal of the portion of the sludge layer adhered in immediate contact with the tube wall surface.

Figs. 3a and 3b are flow system schematics showing, together, a preferred system for commerical scale practice of the present invention.

As shown in Fig. 3a, the liquid to be subjected to cross-flow microfiltration is initially fed into a recirculation tank 30 together with pretreatment chemicals, if required, to render the feed more cohesionless. Feed pump 40 pumps the feed liquid from recirculation tank 30 to modular filtration tube systems (module systems) 51, 52, 53. While three module systems have been shown, in practice, any number of module systems may be utilized, as necessary. As shown, module systems 51, 52, 53 are preferably fluidly connected in parallel, with the liquid being fed to the systems via feed lines 60 and the permeate being drawn from the systems via permeate lines 70. After circulating through modular systems 51, 52, 53 (as will be described below), the feed liquid exits the system via exit lines 80.

Filtration control valves A1, A2, A3 and back pressure relief valves B1, B2, B3 are situated in exit lines 80 as shown. During periods of normal filtration, back pressure relief valves B1, B2, B3 are closed, so that the transmembrane pressure in each module system 51, 52, 53 is controlled by the setting of filtration control valves A1, A2, A3. When back pressure relief valve B1 is opened, module system 51 is in the enhanced sludge layer erosion (cleaning) mode, wherein (1) the transmembrane pressure is essentially null and (2) the circulation velocity is inherently increased. If valves B2 and B3 remain closed while valve B1 is opened, the increase in circulation velocity through module system 51 will be substantial, by virtue of the substantially reduced back pressure in module system 51, compared to that in module systems 52 and 53 (insuring that the bulk of the entire flow from feed pump 40 will pass through module system 51 when valve B1 is opened). In practicing the invention, back pressure relief valves B1, B2 and B3 are thus preferably sequentially opened, while the other two B valves remain closed.

Preferably, the feed liquid exiting from filtration module systems 51, 52, 53 is returned from exit lines 80 to recirculation tank 30 via return lines 90 for subsequent recirculation through the system. As shown, recirculation tank 30 is preferably equipped for bottom sludge removal and a tank 100 containing a solution for cleaning the filtration tubes is fluidly connected to both return line 90 and feed pump 40 by a system of by-pass valves in a known manner.

Fig. 3b illustrates two of the modular filtration tube systems 51, 52, in greater detail. Module system 51, as shown, is comprised of three filtration tubes or modules (parallel tube bundles) 54, 55, 56 fluidly connected in series, comprising the module system. Likewise, module 52 is comprised of three filtration tubes or modules 57, 58, 59 fluidly connected in series. While three tubes or modules have been shown, any number of tubes or modules may be utilized, as necessary. It should be noted that the permeate jackets surrounding filtration tubes or modules 54-59 have not been shown in Fig. 3b, in order to better show the overall liquid flow pattern within each module.

Commercial scale practice of the invention will require multiple filtration tubes (modules) arranged in parallel and/or in series. The general principles discussed in conjunction with the apparatus shown in Fig. 2 will, however, apply equally to such larger scale practice of the invention.

Examples 1 and 2 presented below derive from cross-flow microfiltration tests, each of which was performed with a single nylon microporous tube. A schematic diagram showing the single filtration tube test loop utilized in these tests is presented in Fig. 2.

As indicated in Fig. 2, the process test loop included a feed reservoir 11 having approximately a 2 gallon capacity, a thermometer 12 and a temperature control unit 13 for the feed reservoir. Circulation pump 2 drew the test fluid from reservoir 11. In Examples 1 and 2, the test fluid comprised electroplating rinse water and the pretreatment (neutralization) agent was lime. Circulation flow rate was measured with a fixed volume container and a timer (neither shown). Pressure guages, 14 and 15, were provided in feed line 3 and at the downstream end of the single microfiltration tube 1, respectively, to measure the pressure in the system, as well as the pressure drop across tube 1. Regulator (flow control) valve 4, feed by-pass valve 16, and feed control valve 17 regulated the flow through the system. Regulator valve 4 provided back pressure to the system. Cross-flow, microfiltration tube 1, surrounded by permeate collecting jacket 6, was included in the loop. Permeate control valve 8 provided back pressure to the permeated flow as it exited from permeate port 7, which extended through the wall of collecting jacket 6.   Permeated liquid was returned to reservoir 11 via permeate line 9.

The internal diameter of the nylon microporous tube 1 utilized in Examples  1 and 2 was 6 millimeters and the external diameter was 8 millimeters.   Tube 1 had a length of 46 centimeters and a filtration area of approximately 86.7 square centimeters.   The tube had a 65% porosity, with pore sizes ranging from 2 to 10 microns.   These tests were carried out in a "constant concentration-constant volume" mode, i.e., the permeate was remixed into the feed reservoir so that the volume of the circulating feed, which consisted of electroplating waste  precipitates, as well as the suspended solids concentration, remained relatively constant.

Example 3 was carried out with a 12 tube module, instead of the single tube used in Examples 1 and 2, and utilized a physically different loop which, however, performed in a substantially identical fashion to that described in conjunction  with Examples 1 and 2.   The liquid tested in Example 3 was turbid, brackish Chesapeake Bay water containing sizeable quantities of microorganisms.   A mixture of ferric chloride and sodium hydroxide was added to the water prior to filtration in order to obtain a more cohesionless feed.

Example 1

Utilizing the test apparatus shown in Fig. 2, a comparative example was first run to demonstrate the filtration flux values for an ordinary cross-flow microfiltration process and a flux enhanced process in accordance with the invention.   The operational conditions for both cases were identical.

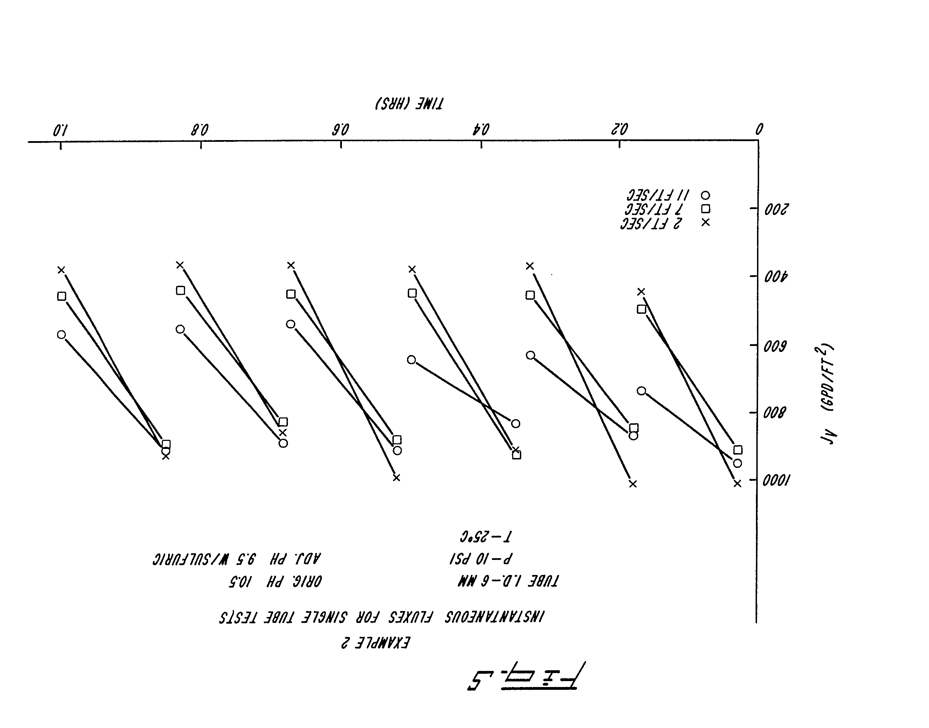

As shown in the graph presented in Fig. 4, the flux value continuously declined for an ordinary filtration process, even after four hours of operation. The plateau flux values were, however, reached after only about one-half to one hour of operation with the flux enhancement technique of the present invention.

The flux enhancement technique used in this example was administered by closing the permeate port for 30 seconds after every 10 minutes of filtration in cyclic fashion. The circulation velocity during filtration was 7 fps. During the intervals that the permeate port was closed, the circulation velocity was essentially unchanged.

Example 2

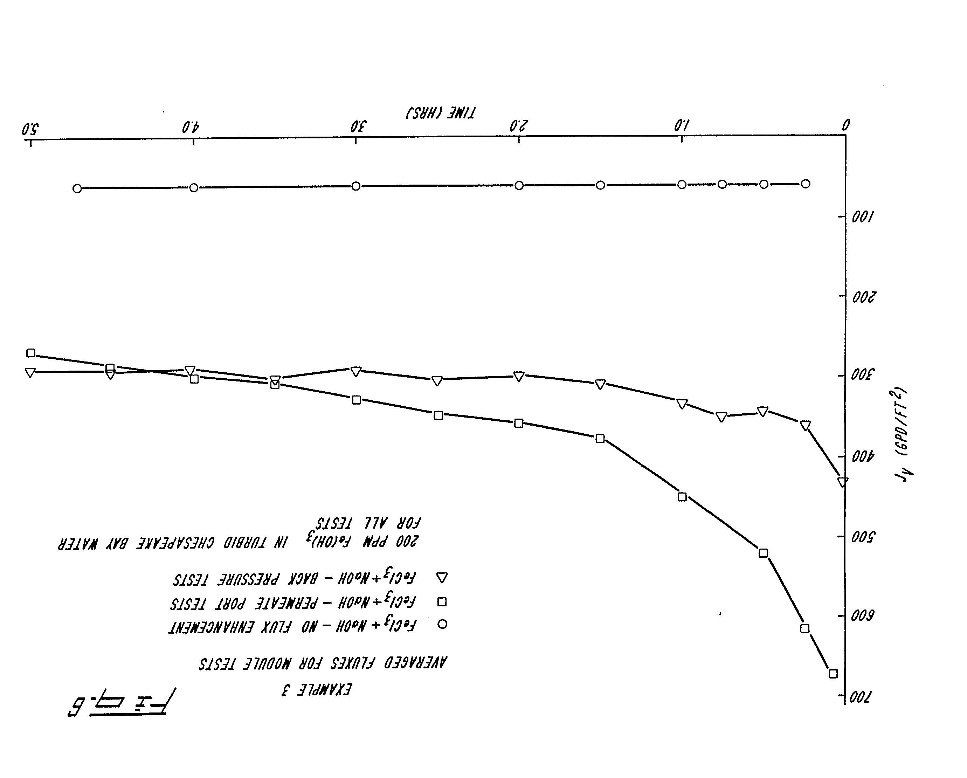

The results of this example, which are depicted in the graph presented in Fig. 5, present the flux enhancement effect by periodically relieving the back pressure in the system (Fig. 2) for 30 seconds, thus reducing the transmembrane pressure to nearly zero, and at the same time inherently increasing the circulation velocity substantially to between about 13-15 fps; this cleaning process was carried out at 10 minute intervals. Since the flux rate is proportional to the transmembrane pressure, and since the circulation velocity is inversely proportional to the back pressure in this experimental system, reducing the back pressure has two effects on system performance, namely (1) reducing the permeate flow rate, and (2) increasing the circulation velocity through the system. The large positive jump in flux following the opening of the back pressure valve 4 to flux values essentially independent of the circulation velocity during the normal filtration indicates that the increased circulation velocity during the cleaning portion of the cycle periodically removed essentially the entire sludge layer.

Example 3

The results of this example, which are plotted in terms of average flux values in the graph shown in Fig. 6, present a comparison of the flux values obtained without any flux enhancement with those obtained with flux enhancement in accordance with the two embodiments of present invention.    Flux enhancement was achieved in one series of tests by opening the back pressure valve at the downstream end of the filter tube module for 1 minute, then partially reclosing it to its normal filtration position for 4 minutes, and continuously repeating this cycle.    In a second series of tests, flux enhancement was achieved by closing the permeate port for 1 minute, then reopening it to its normal filtration position for 4 minutes, and continuously repeating this cycle.    In these two series of tests, the circulation velocity was maintained relatively constant (about 7 ft. per sec.)    throughout the test. That is, it was not independently increased during periods of enhanced sludge layer erosion.    However, as noted above, there is a certain inherent increase in circulation velocity which accompanies  the opening of the back pressure valve.

The plateau flux valves obtained with flux enhancement in these two series of tests should be compared with those obtained in a third series of control tests run in the absence of flux enhancement.    Likewise, the plateau flux valves shown in Fig. 6 should be compared with those shown in Fig. 5, where flux enhancement included the step of periodically substantially increasing the circulation velocity coincidentally with the periods of enhanced sludge layer erosion. The efficiency of such periodic inreases in circulation velocity, in terms of higher plateau flux values, is clearly shown by this comparison (about 300 gallons per day (GPD)/ft.$^2$ vs. about 700 GPD/ft.$^2$).

In observing the plots of the instantaneous values of flux for the "permeate port" series of tests, we noted that the positive jump in flux immediately following the closure of the permeate port were relatively small, thus suggesting that a layer of sludge remains tenaciously adhered to the tube wall, in the absence of a simultaneous periodic substantial increase in circulation velocity.

It will be apparent to those of ordinary skill in the art that various modifications and variations can be made to the above-described embodiments of the invention without departing from the scope of the appended claims and their equivalents. As an example, the method and apparatus of the invention can have application to cross-flow filtration techniques other than microfiltration, such as, for example, ultrafiltration and reverse osmosis.

CLAIMS:

1. A method of increasing the cross-flow filtration flux of a suspended solids laden liquid through a porous filter tube wall, comprising the steps of:

a) flowing the liquid through the filter tube and permeating the liquid through the tube wall by establishing a transmembrane pressure within the tube, thereby depositing at least a portion of the solids on the inner surface of the tube as a sludge layer;

b) periodically reducing the transmembrane pressure to about zero for periods not in excess of about 2 minutes, thereby permitting enhanced erosion of the sludge layer so as to reduce its thickness; and

c) re-establishing the transmembrane pressure after each intermittent reduction, whereby the time-averaged filtration flux is increased.

2. A method as claimed in claim 1, wherein the transmembrane pressure is established by creating a net positive pressure within the filter tube, and wherein the periodic reduction of the transmembrane pressure is achieved by periodically reducing said net positive pressure to about zero.

3. A method as claimed in claim 1 or 2, further comprising the steps of collecting the liquid permeated through the filter tube wall in a closed jacket surrounding the filter tube in a manner adapted to establish a pressure differential between the liquid in the jacket and the liquid in the tube, and removing the collected liquid from the jacket via a port extending through the jacket.

4.  A method as claimed in claim 3, further comprising the steps of periodically reducing the pressure differential between the jacket and the interior of the filter tube to about zero for periods not in excess of about 2 minutes by closing the port in the permeate-collecting jacket, thereby permitting enhanced erosion of the sludge layer so as to further reduce its thickness, and re-establishing the pressure differential after each intermittent reduction by opening the port, whereby the time-averaged filtration flux is further increased.

5.  A method as claimed in claim 1, 2 or 4, further comprising the step of periodically increasing the circulation velocity of the liquid flowing lengthwise through the filter tube coincidentally with the periods during which the transmembrane pressure is reduced to about zero, the circulation velocity being increased to a value in excess of about 7 ft. per sec.

6.  A method as claimed in claim 5, wherein the circulation velocity is periodically increased to a value within the range of from about 10 ft. per sec. to about 20 ft. per sec.

7.  A method as claimed in claim 5, wherein the circulation velocity is periodically increased to a value of about 15 ft. per sec.

8.  A method as claimed in claim 1, 2 or 4, wherein the transmembrane pressure is periodically reduced to about zero for periods within the range of from 5 seconds to about 60 seconds, and wherein the time intervals between said periodic reductions do not exceed about 20 minutes.

9.  A method as claimed in claim 8, wherein the transmembrane pressure is periodically reduced to about zero for periods of about 30 seconds.

10. A method as claimed in claim 8, wherein the time intervals between said periodic reductions are within the range of from about 1 minute to about 10 minutes.

11. A method of increasing the cross-flow filtration flux of a suspended solids laden liquid through a porous filter tube wall, comprising the steps of:

a) flowing the liquid through the filter tube and permeating the liquid through the tube wall by establishing a transmembrane pressure within the tube, thereby depositing at least a portion of the solids on the inner surface of the tube as a sludge layer;

b) collecting the liquid permeated through the filter tube wall in a closed jacket surrounding the filter tube in a manner adapted to establish a pressure differential between the liquid in the jacket and the liquid in the tube, and removing the collected liquid from the jacket via a port extending through the jacket;

c) periodically reducing the pressure differential between the jacket and the interior of the filter tube to about zero for periods not in excess of about 2 minutes by closing the port in the permeate-collecting jacket, thereby permitting enhanced erosion of the sludge layer so as to reduce its thickness, and re-establishing the pressure differential after each intermittent reduction by opening the port; and

d) periodically increasing the circulation velocity of the liquid flowing lengthwise through the filter tube coincidentally with the periods during which the pressure differential is reduced to about zero, the circulation velocity being increased to a value in excess of about 7 ft. per sec., whereby the time-averaged filtration flux is increased.

12. A method as claimed in claim 4 or 11, wherein the pressure differential between the jacket and the interior of the filter tube is periodically reduced to about zero for periods within the range of from about 5 seconds to about 60 seconds.

13. A method as claimed in claim 11, wherein the circulation velocity of the liquid is periodically increased to a value within the range of from about 10 ft. per sec. to about 20 ft. per sec.

14. A method as claimed in claim 1, 2, 4, or 11, wherein the porous filter tube is made of an extrudable thermoplastic composition selected from the group consisting of nylon and polyethylene and has a wall about one (1) millimeter in thickness.

15. A method as claimed in claim 1, 2, 4, or 11 including the step of pretreating the liquid prior to flowing it through the filter tube so as to render the liquid substantially cohesionless.

16. A method as claimed in claim 5, including the step of pretreating the liquid prior to flowing it through the filter tube so as to render the liquid substantially cohesionless.

17. A method of increasing the cross-flow filtration flux of a suspended solids laden liquid through a porous filter tube wall, comprising the steps of:

a) flowing the liquid through the filter tube and permeating the liquid through the tube wall by establishing a transmembrane pressure within the tube, thereby depositing at least a portion of the solids on the inner surface of the tube as a sludge layer;

b) periodically increasing the circulation velocity of the liquid flowing lengthwise through the filter tube to a value in excess of 7 ft. per sec. for intervals not in excess of about 2 minutes, thereby permitting enhanced erosion of the sludge layer so as to reduce its thickness; and

c) reducing the circulation velocity after each intermittent increase, whereby the time-averaged filtration flux is increased.

18. A method as claimed in claim 17, wherein the circulation velocity is periodically increased to a value within the range of from about 10 ft. per sec. to about 20 ft. per sec.

19. A method as claimed in claim 17, wherein the circulation velocity is periodically increased to about 15 ft. per sec.

20. A method as claimed in claim 17, 18 or 19, wherein the circulation velocity is periodically increased for intervals within the range of from about 5 seconds to about 60 seconds.

21. A method as claimed in claim 17, 18 or 19, wherein the circulation velocity is periodically increased for intervals of about 30 seconds.

22. Apparatus for increasing the cross-flow filtration flux of a suspended solids laden liquid through a porous filter tube wall, comprising:

a) at least one porous filter tube;

b) means for flowing the liquid through the filter tube;

c) means for establishing a transmembrane pressure within the filter tube, thereby affecting permeation of the liquid through the tube wall, causing at least a portion of the solids to be deposited on the inner surface of the tube as a sludge layer; and

d) means for periodically reducing the transmembrane pressure to about zero and then re-establishing it, thereby permitting periodic enhanced erosion of the sludge layer so as to reduce its thickness and increase the time-averaged filtration flux.

23. Apparatus as claimed in claim 22, wherein said means for establishing a transmembrane pressure within the filter tube includes a normally partially closed valve located at the downstream end of the filter tube for creating a net positive pressure in the tube, and wherein said means for periodically reducing the transmembrane pressure to about zero and then re-establishing it includes a time-regulated actuating means operatively connected to said valve for periodically opening said valve, thereby reducing the net positive pressure in the tube to essentially zero.

24. Apparatus as claimed in claims 22 or 23, wherein said means for establishing the transmembrane pressure includes closed jacket means surrounding the filter tube for collecting the liquid permeated through the filter tube wall and establishing a pressure differential between the liquid in the jacket means and the liquid in the tube, said jacket means having a port for the removal of collected liquid; and wherein said means periodically reducing the transmembrane pressure includes means for periodically reducing said pressure differential to about zero and then re-establishing it, thereby periodically reducing the transmembrane pressure to about zero.

25. Apparatus as claimed in claim 24, wherein said means for periodically reducing said pressure differential to about zero and then re-establishing it includes a time-regulated valve situated in said port for periodically closing and re-opening said port, whereby said pressure differential is reduced to about zero when said port is closed.

26. Apparatus as claimed in claim 22, further comprising means for periodically increasing the velocity of the liquid flowing lengthwise through the filter tube coincidentally with the periods during which the transmembrane pressure is reduced to about zero, the velocity being increased to a value in excess of about 7 ft. per sec., whereby the time-averaged filtration flux is further increased.

27. Apparatus as claimed in claim 22, wherein the apparatus includes a plurality of said porous filter tubes or tube bundles fluidly connected in series to form a tube module system.

28. Apparatus as claimed in claim 27, wherein the apparatus includes a plurality of said tube module systems fluidly connected in parallel.

29. Apparatus as claimed in claim 28, wherein the apparatus includes means for sequentially reducing the transmembrane pressure in each individual tube module system while maintaing the normal transmembrane pressure in the other tube module systems.

30. Apparatus as claimed in claim 29, wherein said means for establishing the transmembrane pressure includes a plurality of normally partially closed filtration control valves, one filtration control valve being located at the downstream end of each of said tube modules, and wherein said means for sequentially reducing the transmembrane pressure comprises a plurality of back pressure relief valves, one back pressure relief valve being located at the downstream end of each of said tube modules and being fluidly connected in parallel with the associated filtration control valve for said tube module.

31. Apparatus for increasing the cross-flow filtration flux of a suspended solids laden liquid through a porous filter tube wall, comprising:

a) at least one porous filter tube;

b) means for flowing the liquid through the filter tube;

c) means for establishing a transmembrane pressure within the filter tube, thereby effecting permeation of the liquid through the tube wall, causing at least a portion of the solids to be deposited on the inner surface of the tube as a slude layer; and

d) means for periodically increasing the circulation velocity of the liquid flowing lengthwise through the filter tube to a value in excess of about 7 ft. per sec. and thereafter reducing it, thereby permitting enhanced erosion of the sludge layer so as to reduce its thickness and increase the time-averaged filtration flux.

Fig. 1

FILTRATE

FEED → FEED

FILTRATE

Fig. 2

0079040

PERMEATE

60 70 53 80 B₃ A₃ 60 70 52 80 B₂ A₂ 60 70 51 80 B₁ A₁ 60

40

90

100

CHEMICALS

FEED

30

SLUDGE REMOVAL

*Fig. 3a*

52 59 60 58 57 80 B₂ A₂ 56 60 55 80 B₁ A₁ 54 51 90

*Fig. 3b*

FIG. 4

EXAMPLE 1
INSTANTANEOUS FLUXES FOR SINGLE TUBE TESTS

TUBE I.D. – 6 MM
V – 7.0 FT/SEC
P – 10 PSI
T – 25°C

FLUX ENHANCEMENT

NO FLUX ENHANCEMENT

$J_V$ (GPD/FT$^2$)

TIME (HRS.)

3/5

0079040

FIG.5

EXAMPLE 2

INSTANTANEOUS FLUXES FOR SINGLE TUBE TESTS

ORIG. PH  10.5
ADJ. PH  9.5 W/SULFURIC

TUBE I.D.-6 MM
P-10 PSI
T-25°C

× 2 FT/SEC
□ 7 FT/SEC
○ 11 FT/SEC

TIME (HRS)

$J_V$ (GPD/FT$^2$)

FIG.6

EXAMPLE 3

AVERAGED FLUXES FOR MODULE TESTS

○  $FeCl_3 + NaOH$ — NO FLUX ENHANCEMENT
□  $FeCl_3 + NaOH$ — PERMEATE PORT TESTS
△  $FeCl_3 + NaOH$ — BACK PRESSURE TESTS

200 PPM $Fe(OH)_3$ IN TURBID CHESAPEAKE BAY WATER
FOR ALL TESTS

$J_V$ (GPD/FT²)

TIME (HRS.)